# EUROPÄISCHE PATENTSCHRIFT

(11) **EP 2 626 980 B1**
(45) Veröffentlichungstag und Bekanntmachung des Hinweises auf die Patenterteilung: **05.11.2014**
(21) Anmeldenummer: 12154461.3
(22) Anmeldetag: 08.02.2012
(51) Int. Cl.: H02K 5/10, H02K 11/00, H02K 7/14

(54) **Pumpenaggregat**
Pump power unit
Groupe motopompe

(43) Veröffentlichungstag der Anmeldung: 14.08.2013
(73) Patentinhaber: Grundfos Holding A/S, 8850 Bjerringbro (DK)
(72) Erfinder: Jacobsen, John B., 8850 Bjerringbro (DK)
(74) Vertreter: Patentanwälte Vollmann & Hemmer

(56) Entgegenhaltungen:
- EP-A1- 1 947 343
- JP-A- 11 107 960
- JP-A- 58 086 842
- JP-A- 2001 317 486
- JP-A- 2004 162 609
- KR-A- 20090 065 938
- US-A- 5 010 265
- US-A1- 2003 102 740

## Beschreibung

Die Erfindung betrifft ein Pumpenaggregat mit den im Oberbegriff des Anspruchs 1 angegebenen Merkmalen.

Es sind Pumpenaggregate bekannt, welche eine Baueinheit aus einer Pumpe, einem elektrischen Antriebsmotor und einem an den Antriebsmotor angeordneten Elektronikgehäuse bzw. Klemmenkasten, in welchem elektrische und/oder elektronische Bauelemente zum Anschluss und zur Steuerung bzw. Regelung des Antriebsmotors angeordnet sind, bilden. Derartige Pumpenaggregate werden häufig in feuchter Umgebung eingesetzt. Dabei besteht das Problem, das Feuchtigkeit in den Klemmenkasten eindringen kann und dort die Funktion der Elektronik beeinträchtigen kann. Aus diesem Grunde wird der Klemmenkasten in der Regel gedichtet ausgebildet. Allerdings ist es, gerade wenn externe Anschlüsse, wie Anschlussstecker oder ähnliches vorgesehen sind, schwierig, den Klemmenkasten so dicht auszubilden, dass sicher keine Feuchtigkeit in das Innere eindringen kann.

Dokument EP1947343 offenbart ein Pumpenaggregat mit einem Elektromotor und einem Klemmenkasten.

Im Hinblick auf diese Problematik ist es Aufgabe der Erfindung, ein Pumpenaggregat mit einem elektrischen Antriebsmotor dahingehend zu verbessern, dass elektrische Bauteile im Inneren eines Klemmenkastens besser vor Feuchtigkeit geschützt sind.

Diese Aufgabe wird durch ein Pumpenaggregat mit den in Anspruch 1 angegebenen Merkmalen gelöst. Bevorzugte Ausführungsformen ergeben sich aus den Unteransprüchen, der nachfolgenden Beschreibung sowie den beigefügten Figuren

Das erfindungsgemäße Pumpenaggregat weist in bekannter Weise ein Pumpenlaufrad auf, welches bevorzugt in einem Pumpengehäuse angeordnet ist und von einem elektrischen Antriebsmotor drehend angetrieben wird. Der elektrische Antriebsmotor weist vorzugsweise ein Statorgehäuse auf, in welchem der Stator und der Rotor des Antriebsmotors angeordnet sind und welches vorzugsweise mit einem Pumpengehäuse des Pumpenaggregates fest verbunden ist. An dem Antriebsmotor, d. h. vorzugsweise an der Außenseite des Statorgehäuses ist erfindungsgemäß ein Klemmenkasten angeordnet, in welchem elektrische und/oder elektronische Bauteile zum Anschluss und/oder zur Regelung bzw. Steuerung des Antriebsmotors angeordnet sind. Von dem elektrischen Antriebsmotor erstreckt sich ein metallisches Bauteil in das Innere des Klemmenkastens hinein. Im Inneren des Klemmenkastens ist in der Umgebung des metallischen Bauteils eine Auffangeinrichtung angeordnet. Diese ist so ausgestaltet, dass sie Kondenswasser auffangen kann, welches sich an dem metallischen Bauteil ansammelt. Das metallische Bauteil dient somit als Sammelpunkt für Kondenswasser im Inneren des Klemmenkastens, so dass das Kondenswasser sich bevorzugt an diesem metallischen Bauteil und nicht an den übrigen Bauteilen niederschlägt. Wenn es von dem metallischen Bauteil abtropft, wird es dann von der Auffangeinrichtung gezielt aufgefangen, so dass es nicht mit elektrischen oder elektronischen Bauteilen im Inneren des Klemmenkastens in Kontakt kommt und diese in ihrer Funktion beeinträchtigen könnte.

Das metallische Bauteil kann insbesondere dann als Sammelpunkt für Kondenswasser dienen, wenn es wärmeleitend mit dem elektrischen Antriebsmotor verbunden ist und dieser in dem Bereich, in welchem das metallische Bauteil mit dem Antriebsmotor verbunden ist, besser gekühlt ist als der Innenraum des Klemmenkastens. So bildet das metallische Bauteil im Inneren des Klemmenkastens einen kalten Punkt, an welchem Wasser gezielt kondensiert. Eine Kühlung kann beispielsweise durch die Kühlung des elektrischen Antriebsmotors, beispielsweise einen Lüfter oder aber durch metallische Gehäuseteile erfolgen, während im Klemmenkasten durch die Abwärme der elektronischen Bauelemente meist eine höhere Temperatur herrscht. Eine besonders gute Kühlung kann dann erreicht werden, wenn das Pumpenaggregat als Pumpe für kalte Medien eingesetzt wird und das Pumpenaggregat durch das geförderte kalte Medium, d. h. bevorzugt Kaltwasser gekühlt wird.

Die Auffangeinrichtung ist vorzugsweise als ein in zumindest einer vorgegebenen Einbaulage des Pumpenaggregates unterhalb des metallischen Bauteils im Inneren des Klemmenkastens angeordneter nach oben geöffneter Sammelraum ausgebildet. Durch die Öffnung an der Obenseite kann die Feuchtigkeit von dem metallischen Bauteil herunter in den Sammelraum hineintropfen und dort gesammelt werden. Eine vorgegebene Einbaulage ergibt sich beispielsweise dadurch, dass dem Benutzer eine definierte Einbaulage für das Pumpenaggregat vorgegeben wird, in welcher das Pumpenaggregat zu betreiben bzw. einzubauen ist. In dieser Einbaulage ist dann der Sammelraum in der beschriebenen Weise angeordnet, so dass er nach oben geöffnet ist.

Besonders bevorzugt weist der Sammelraum zumindest eine zu einer Außenseite des Klemmenkastens geöffnete Ablauföffnung auf, welche derart angeordnet ist, dass durch diese Ablauföffnung von der Auffangeinrichtung aufgefangenes Kondenswasser aus dem Inneren des Klemmenkastens nach außen ablaufen kann. Insbesondere ist die Ablauföffnung mit dem vorangehend beschriebenen Sammelraum verbunden, so dass das sich das dort ansammelnde Kondenswasser durch die Ablauföffnung nach außen aus dem Klemmenkasten herauslaufen kann. In der genannten vorgegebenen Einbaulage des Pumpenaggregates ist die Ablauföffnung vorzugsweise nach unten geöffnet oder in einem Winkel kleiner als 90° zur Horizontalen gerichtet, um einen Ablauf des Kondenswassers nach außen zu gewährleisten. Um dieses Ablaufen zu unterstützen und gleichzeitig das Eindringen von Feuchtigkeit von außen zu verhindern, kann die Ablauföffnung mit einem Filter oder Ventil versehen sein, welche einen Flüssigkeitsdurchlass nur in einer Richtung, nämlich von innen aus dem Klemmenkasten nach außen ermöglichen. So kann in der Öffnung auch ein Material mit Kapillarwirkung, beispielsweise ein Sinterfilter angeordnet werden, welcher durch Kapillarwirkung dafür sorgt, dass die Feuchtigkeit aus dem Inneren des Klemmenkastens von der Auffangeinrichtung zur Außenseite des Klemmenkastens geführt wird.

Zusätzlich oder alternativ zu der Ablauföffnung kann in der Auffangeinrichtung und insbesondere in dem Sammelraum auch ein Bindemittel zum Binden der aufgefangenen Feuchtigkeit angeordnet sein. Die Aufnahmekapazität des Bindemittels ist dann bevorzugt so dimensioniert, dass sämtliche Feuchtigkeit, welche sich in einer vorgegebenen Betriebsdauer des Pumpenaggregates im Klemmenkasten sammelt, aufgefangen und gebunden werden kann.

Eine Ablauföffnung ist weiter bevorzugt in einer dem metallischen Bauteil benachbarten Wandung ausgebildet. So ist die Ablauföffnung möglichst nahe zu dem metallischen Bauteil angeordnet, so dass Feuchtigkeit, welche sich an dem metallischen Bauteil durch Kondensation sammelt, auf möglichst kurzem Weg aus dem Inneren des Klemmenkastens nach außen abgeführt werden kann und nicht mit weiteren, insbesondere elektrischen oder elektronischen Bauteilen im Inneren des Klemmenkastens in Kontakt kommt.

Der Sammelraum weist weiter bevorzugt zumindest zwei schräg aufeinander zulaufende Seitenflächen auf, welche im Bereich ihres geringsten Abstandes zueinander an die Ablauföffnung angrenzen. D. h. die beiden Seitenflächen erstrecken sich schräg nach unten, d. h. geneigt zur Horizontalen zu der Ablauföffnung hin, so dass in dem Sammelraum aufgefangenes Kondenswasser über die schrägen Seitenflächen zu der Ablauföffnung hin geleitet wird. Die schräg aufeinander zulaufenden Seitenflächen definieren somit einen rinnenförmigen Sammelraum, an dessen tiefsten Punkt vorzugsweise die Ablauföffnung angeordnet ist. Diese Konfiguration ist, wie vorangehend beschrieben, bevorzugt bei zumindest einer vorgegebenen Einbaulage des Pumpenaggregates der Fall.

Besonders bevorzugt handelt es sich bei dem elektrischen Antriebsmotor um einen nasslaufenden Elektromotor. Bei nasslaufenden Elektromotoren ist der Rotorraum des Antriebsmotors mit der zu fördernden Flüssigkeit gefüllt, welche so zu einer Kühlung dieses Bereiches beiträgt. Dies führt insgesamt zu einer Kühlung des Antriebsmotors, so dass bevorzugt auch das mit dem elektrischen Antriebsmotor verbundene metallische Bauteil gekühlt wird und so im Inneren des Klemmenkastens aufgrund seiner wärmeleitenden Eigenschaften bevorzugt den kältesten Punkt bildet, an welchem Wasser bzw. Feuchtigkeit im Klemmenkasten kondensiert. So kann Wasser im Klemmenkasten gezielt gesammelt und dieser in den Bereichen, in welchen elektrische oder elektronische Bauteile angeordnet sind, trocken gehalten werden. Eine solche Kühlung ist insbesondere dann gegeben, wenn es sich bei dem Pumpenaggregat um ein Pumpenaggregat handelt, welches ein kaltes Medium, insbesondere Kaltwasser fördert. Dann kommt es zu einer besonders starken Abkühlung des Rotorraums und damit des Antriebsmotors. Aufgrund der wärmeleitenden Eigenschaften des somit auch das metallische Bauteil, welches mit dem Antriebsmotor verbunden ist, bis in den Klemmenkasten hinein gekühlt.

Hierzu ist das metallische Element bevorzugt mit einem Statorgehäuse oder einem Spaltrohr des elektrischen Antriebsmotors verbunden. Diese Bauteile sind bevorzugt ebenfalls aus Metall ausgebildet und weisen gute wärmeleitende Eigenschaften auf. Das Statorgehäuse kann dabei durch Umgebungsluft gekühlt sein oder aber durch eine Verbindung mit dem Spaltrohr und/oder dem Pumpengehäuse auch durch das zu fördernde Medium gekühlt sein. Das Spaltrohr, wird wie beschrieben bevorzugt durch das zu fördernde Medium gekühlt, insbesondere wenn es sich um eine Kaltwasserpumpe handelt.

Bei dem metallischen Element handelt es sich weiter bevorzugt um einen elektrischen Kontakt und insbesondere einen Erdungskontakt. Ein solcher Erdungskontakt ist üblicherweise mit dem metallischen Statorgehäuse des Pumpenaggregates verbunden, um die Erdungsverbindung von einer elektrischen Anschlussleitung, welche im Klemmenkasten elektrisch angeschlossen ist, zu den übrigen metallischen Bauteilen des Pumpenaggregates, d. h. insbesondere dem Statorgehäuse und dem Pumpengehäuse herzustellen. Aufgrund seiner wärmeleitenden Eigenschaften führt der Erdungskontakt dann dazu, dass er als metallisches Bauteil im Inneren des Klemmenkastens einen kalten Punkt, bevorzugt den kältesten Punkt bilden kann, an welchem Kondenswasser sich sammelt und dann wie beschrieben über die Auffangeinrichtung aufgefangen werden kann. Anstatt eines elektrischen Kontaktes oder eines Erdungskontaktes kann jedoch auch ein anderes metallisches Element, wie beispielsweise eine Verbindungsschraube oder ein metallischer Bolzen als metallisches Element in den Klemmenkasten hineinragen und die beschriebene Funktion zur Sammlung von Kondenswasser haben.

Das metallische Bauteil erstreckt sich bevorzugt durch eine Öffnung im Boden des Klemmenkastens in diesen hinein. Der Boden des Klemmenkastens ist dabei diejenige Wandung des Klemmenkastens, welche dem Antriebsmotor zugewandt ist. Der Klemmenkasten kann am axialen Ende des Antriebsmotors bzw. dessen Statorgehäuses angeordnet sein oder aber auch radial zu diesem im Umfangsbereich. Bei der axialen Anordnung erstreckt sich der Boden vorzugsweise quer zur Längs- bzw. Drehachse des Pumpenaggregates parallel zur axialen Stirnseite des Statorgehäuses. Bei radialer bzw. umfänglicher Anordnung erstreckt sich der Boden bevorzugt in Umfangsrichtung oder tangential zum Außenumfang des Statorgehäuses.

In der Öffnung ist bevorzugt eine Dichtung angeordnet, welche die Öffnung nach außen dicht verschließt und vorzugsweise an einer Wand eines Statorgehäuses des elektrischen Antriebsmotors dichtend zur Anlage kommt. So wird verhindert, dass durch die Öffnung Feuchtigkeit von außen in das Innere des Klemmenkastens eindringen kann. Die Dichtung kann, wie beschrieben im Unfangsbereich des metallischen Bauteiles an einer Wand eines Statorgehäuses zur Anlage kommen. Alternativ oder zusätzlich kann die Dichtung auch direkt am Außenumfang des metallischen Bauteils dichtend zur Anlage kommen.

Die Ablauföffnung ist vorzugsweise in einer sich quer, insbesondere im Wesentlichen normal zu dem Boden erstreckende Umfangswandung ausgebildet. Dabei kann sich das metallische Element weiter bevorzugt im Wesentlichen parallel zu der Umfangswandung in das Innere des Klemmenkastens hinein erstrecken. In einer vorgegebenen Einbaulage des Pumpenaggregates ist diese Erstreckungsrichtung besonders bevorzugt eine horizontale Richtung. Feuchtigkeit bzw. Kondenswasser kann dann nach unten abtropfen und von einer unterhalb des metallischen Bauteils angeordneten Auffangeinrichtung aufgefangen werden. Diese Auffangeinrichtung ist dann bevorzugt an der sich quer zum Boden erstreckenden Umfangswandung ausgebildet, an welcher sich auch die Ablauföffnung befindet. Die Ablauföffnung ist dabei bevorzugt an der tiefsten Stelle der Auffangeinrichtung und weiter bevorzugt an der tiefsten Stelle der Umfangswandung gelegen, so dass die Feuchtigkeit durch Schwerkraft nach außen abgeleitet werden kann. Eine solche Ausgestaltung bietet sich insbesondere dann, wenn der Klemmenkasten axialseitig eines zylindrischen Statorgehäuses angeordnet ist und sich die Längsachse des Statorgehäuses, welche der Drehachse der im Inneren angeordneten Rotorwelle entspricht, sich in der zumindest einen vorgegebenen Einbaulage horizontal erstreckt. Dabei kann sich das metallische Bauteil ebenfalls horizontal von der axialen Stirnseite des Statorgehäuses aus durch den Boden des Klemmenkastens in diesen hineinerstrecken.

Die Ablauföffnung ist zweckmäßigerweise in einem Bereich der Umfangswandung gelegen, welcher dem metallischen Bauteil am nächsten liegt. Dies ermöglicht es, die Ablauföffnung möglichst nahe zu dem metallischen Bauteil hin anzuordnen, so dass die Feuchtigkeit, welche sich an dem metallischen Bauteil sammelt, direkt der Ablauföffnung zugeführt werden kann, ohne dass die Feuchtigkeit in andere Bereiche des Klemmenkastens eindringt.

Besonders bevorzugt ist der an dem elektrischen Antriebsmotor angeordnete Klemmenkasten mit Ausnahme der Ablauföffnung nach außen vollständig geschlossen. D. h. vorzugsweise sind alle erforderlichen Öffnungen mit Dichtungen versehen, um ein Eindringen von Feuchtigkeit von außen zu verhindern.

Gemäß einer weiteren bevorzugten Ausführungsform ist die Ablauföffnung in einer Wandung, insbesondere einer Außenwandung des Klemmenkastens ausgebildet und an der Außenseite der Wandung von einer zu der Außenseite der Wandung beabstandeten Außenwand überdeckt. So kann eine Art Labyrinthdichtung geschaffen werden, welche ein Eindringen von Feuchtigkeit von außen in die Ablauföffnung verhindert. Insbesondere schützt die Außenwand die Ablauföffnung davor, dass Strahl- oder Spritzwasser in die Ablauföffnung von außen eintreten kann. Vorzugsweise ist die Ablauföffnung in einer an das Statorgehäuse angrenzenden Wandung des Klemmenkastens ausgebildet und die Außenwand ist eine Wand, welche das Statorgehäuse außenseitig, insbesondere umfänglich überlappt bzw. überdeckt. Die Außenwand kann dabei beabstandet zur Außenseite des Statorgehäuses angeordnet sein, so dass ein Freiraum bzw. ein Spalt verbleibt, welcher sich außenseitig an die Ablauföffnung anschließt. So kann Kondenswasser durch die Ablauföffnung und durch diesen Freiraum im Umfangsbereich des Statorgehäuses abfließen. Der Freiraum bildet dabei gleichzeitig einen Luftkanal, welcher bewirkt, dass die Luft, welche in die Ablauföffnung eintritt, zunächst durch diesen Kanal strömen muss. Der Kanal ist vorzugsweise an dem dem Pumpengehäuse zugewandten Axialende des Statorgehäuses geöffnet und hat somit eine Länge, welche bevorzugt im Wesentlichen der axialen Länge des Statorgehäuses entspricht. Die Luft muss somit einen relativ langen Weg von außen bis zu der Ablauföffnung zurücklegen, so dass sie auf diesem Weg bereits getrocknet werden kann, insbesondere wenn Feuchtigkeit in der Luft auf diesem Weg bereits am Außenumfang des Statorgehäuses kondensiert. Auf diese Weise wird noch besser sichergestellt, dass keine Feuchtigkeit von außen in den Klemmenkasten eindringen kann.

Eine solche Ausgestaltung kann auch mit jeder beliebigen Öffnung des Klemmenkastens realisiert werden. So kann der Klemmenkasten vorzugsweise eine Öffnung aufweisen, an deren Außenseite sich ein Luftkanal anschließt, welcher an einer Außenseite eines Statorgehäuses des elektrischen Antriebsmotors entlang geführt ist. Dabei erstreckt sich der Luftkanal besonders bevorzugt im Wesentlichen über die gesamte axiale Länge des Statorgehäuses. Der Luftkanal kann von einer Außenwandung gebildet werden, welche das Statorgehäuse umfänglich umgibt und zum Außenumfang des Statorgehäuses beabstandet ist, so dass das Statorgehäuse umfänglich von einem Freiraum umgeben ist, welcher als Luftkanal fungiert. Insbesondere, wenn das Pumpenaggregat als Kaltwasserpumpe oder als Pumpe zum Fördern kalter Medien eingesetzt wird, wird das Statorgehäuse so kalt, dass Feuchtigkeit aus der Luft schon auf dem Weg zur Öffnung dort kondensiert, so dass die Luft getrocknet in den Klemmenkasten eindringt. Es ist zu verstehen, dass diese Ausführungsform mit einem sich an eine Öffnung anschließenden Luftkanal auch unabhängig von der vorangehend beschriebenen Erfindung verwirklicht werden kann, welche die Anordnung eines mit dem elektrischen Antriebsmotor verbundenen metallischen Bauteils im Inneren des Klemmenkastens mit einer zugehörigen Auffangeinrichtung zum Auffangen von sich an dem metallischen Bauteil ansammelnden Kondenswasser betrifft.

Das Pumpenaggregat ist besonders bevorzugt als ein Umwälzpumpenaggregat, insbesondere ein Umwälzpumpenaggregat für eine Heizungs- oder Klimaanlage ausgebildet.

Nachfolgend wird die Erfindung beispielhaft anhand der beigefügten Figuren beschrieben. In diesen zeigt:
- Fig. 1: eine Schnittansicht eines erfindungsgemäßen Pumpenaggregates,

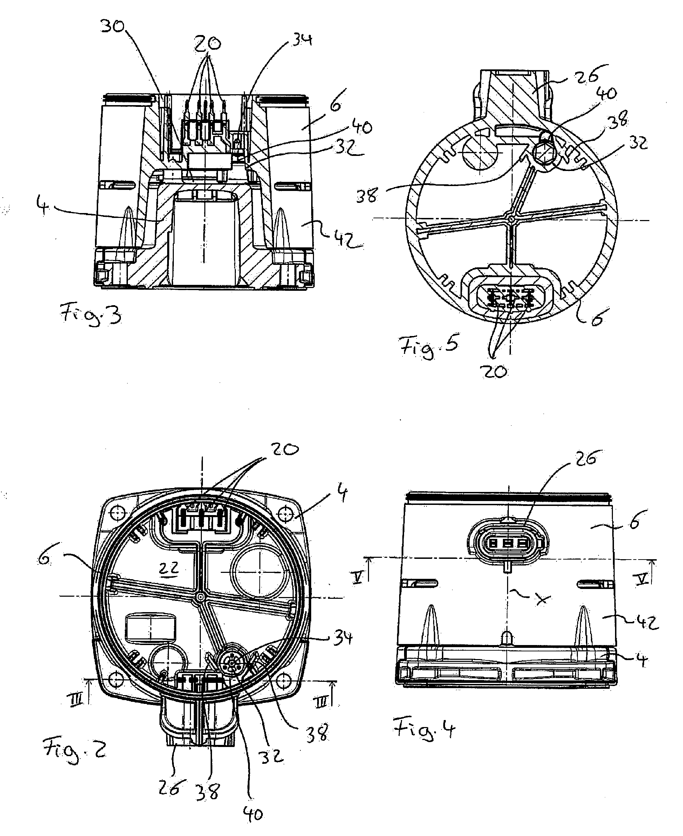

- Fig. 2: eine Draufsicht auf einen Klemmenkasten eines erfindungsgemäßen Pumpenaggregates,
- Fig. 3: eine Schnittansicht entlang der Linie III-III in Figur 2,
- Fig. 4: eine Seitenansicht des Klemmenkastens gemäß Figuren 2 und 3,
- Fig. 5: eine Schnittansicht entlang der Linie V-V in Figur 4 und

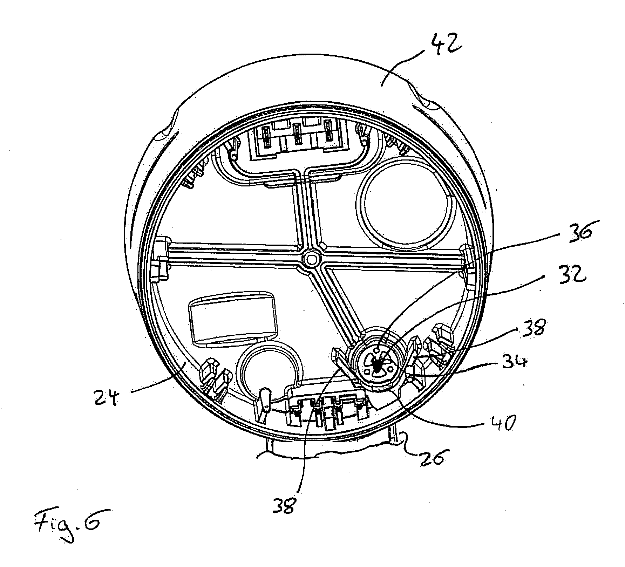

- Fig. 6: eine perspektivische Draufsicht auf den Klemmenkasten gemäß Figuren 2 bis 5.

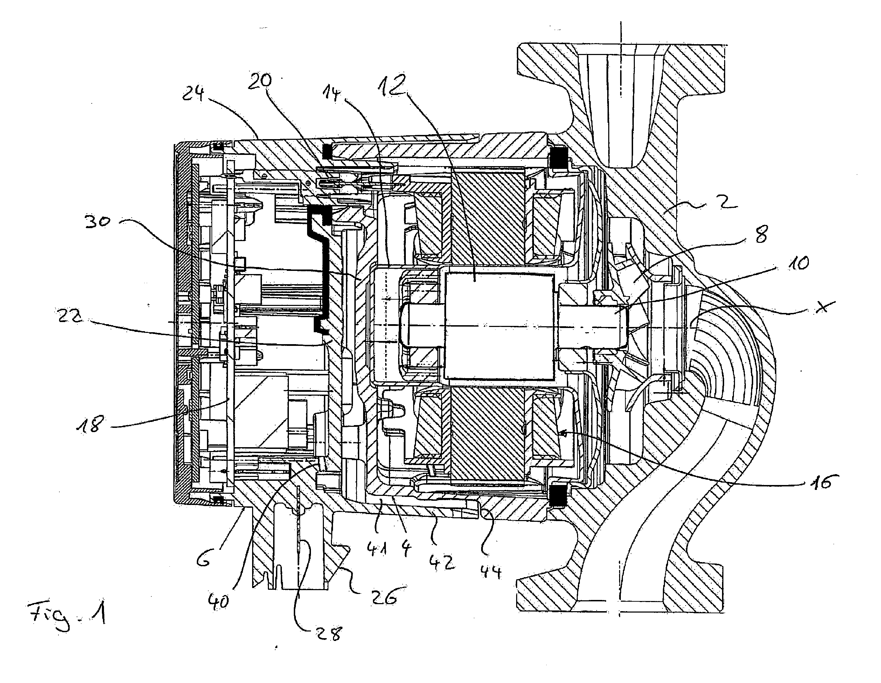

Das in Figur 1 gezeigte Pumpenaggregat bildet eine Baueinheit aus einem Pumpengehäuse 2, einem Statorgehäuse 4, welches das Gehäuse eines elektrischen Antriebsmotors bildet und einem Klemmenkasten 6. Im Pumpengehäuse 2 ist in bekannter Weise ein Laufrad 8 angeordnet, welches über eine Rotorwelle 10 mit einem Rotor 12 des elektrischen Antriebsmotors verbunden ist. Der Rotor 12 ist in einem durch einen Spaltrohrtopf bzw. ein Spaltrohr 14 begrenzten Rotorraum angeordnet. D. h. es handelt sich um einen nasslaufenden Elektromotor. Umfangsseitig des Spaltrohres 14 ist im Inneren des Statorgehäuses 4 der Stator 16 des elektrischen Antriebsmotors angeordnet.

Der Klemmenkasten 6 beinhaltet elektronische Bauelemente zur Steuerung bzw. Regelung des elektrischen Antriebsmotors. Dabei kann es sich insbesondere um einen Frequenzumrichter handeln. Die elektronischen Bauelemente sind an einer Leiterplatte 18 im Inneren des Klemmenkastens 6 angeordnet. Zur elektrischen Verbindung mit dem Stator 16 weist der Klemmenkasten 6 eingegossene elektrische Anschlusskontakte 20 auf, welche mit einem korrespondierenden Anschlussstecker an dem Statorgehäuse 4 in Eingriff treten. Durch das Eingießen der Kontakte 20 ist für diese keine Öffnung im Boden 22 des Klemmenkastens 6 erforderlich, so dass dieser im Bereich der Anschlusskontakte 20 geschlossen und dicht ausgebildet sein kann. Der Klemmenkasten 6 weist darüber hinaus an seiner sich quer zum Boden 22 erstreckenden Umfangswandung 24 eine einstückig angeformte Steckkupplung 26 auf, welche ebenfalls eingegossene Anschlusskontakte 28 aufweist, welche sich durch die Umfangswandung 24 in das Innere des Klemmenkastens 6 hinein erstrecken. Die Anschlusskontakte 28 dienen zur Verbindung mit einer Netz-Anschlussleitung. Durch das Eingießen in die Umfangswandung 24 ist der Klemmenkasten 6 auch in diesem Bereich dicht ausgebildet.

Der Klemmenkasten 6 ist wie gezeigt axialseitig in Richtung der Längs- bzw. Drehachse X des Pumpenaggregates an das Statorgehäuse 4 angesetzt, so dass der Boden 22 sich im Wesentlichen parallel zur axialen Stirnseite 30 des Statorgehäuses 4 quer zur Längsachse X erstreckt.

Der Boden 22 weist eine Öffnung 32 auf. Durch die Öffnung 32 erstreckt sich ein Erdungskontakt 34 in das Innere des Klemmenkastens 6 hinein. Der Erdungskontakt 34 ist als metallisches Bauteil ausgebildet, welches elektrisch leitend mit dem ebenfalls aus Metall ausgebildeten Statorgehäuse verbunden ist und sich von dessen axialer Stirnseite 30 parallel zur Längsachse X in den Klemmenkasten 6 hinein erstreckt. In dem Boden 22 des Klemmenkastens 6 ist ein Kontaktelement 36 eingegossen, welches elektrisch leitend mit einem der Anschlusskontakte 28 verbunden ist, welcher als Erd- bzw. Schutzleiter fungiert.

Der Erdungskontakt 34 ist als metallisches Bauteil, welches mit dem metallischen Statorgehäuse 4 verbunden ist, mit dem Statorgehäuse 4 auch wärmeleitend verbunden. Ferner ist zu erkennen, dass das Spaltrohr 14 zumindest axialseitig an der Innenseite des Statorgehäuses 4 anliegt. So wird auch hier eine wärmeleitende Verbindung geschaffen. Wenn die Pumpe ein kaltes Medium, beispielsweise kaltes Wasser fördert, gelangt dieses auch in das Innere des Spaltrohres 14 und es kommt zu einer Abkühlung des Spaltrohres 14 und auch des Statorgehäuses 4. So kühlt sich auch der Erdungskontakt 34 ab und bildet somit im Inneren des Klemmenkastens 6 einen kalten, vorzugsweise den kältesten Punkt, an welchem sich somit Kondenswasser im Inneren des Klemmenkastens 6 ansammeln kann. So kann die Feuchtigkeit im Inneren des Klemmenkastens 6 gezielt an dem Erdungskontakt 34 gesammelt werden, so dass die Feuchtigkeit die Funktion der elektrischen Bauteile auf der Leiterplatte 18 nicht beeinträchtigt.

Um von dem Erdungskontakt 34 abtropfendes Kondenswasser aufzufangen, ist im Inneren des Klemmenkastens 6 eine Auffangeinrichtung ausgebildet. Diese wird von zwei sich V-förmig zueinander erstreckenden Wandelementen 38 gebildet. Die Seitenflächen dieser Wandelemente 38, welche einander zugewandt sind, definieren so eine Auffangrinne. In dem Bereich, an dem die Wandelemente 38 aneinander angrenzen, ist eine Ablauföffnung 40 am Boden der so gebildeten Rinne angeordnet. Die Ablauföffnung 40 ist im Umfangsbereich, d. h. in der Umfangswandung 24 des Klemmenkastens 6 angeordnet. Das hier gezeigte Pumpenaggregat ist zumindest dann, wenn die beschriebene Auffangeinrichtung unterhalb des Erdungskontaktes 34 ihren Zweck erfüllen soll, in einer definierten Einbaulage zu verwenden, in welcher in diesem Ausführungsbeispiel die Steckkupplung 26 vertikal nach unten gerichtet ist. In dieser vorgegebenen Einbaulage ist auch die Ablauföffnung 40 nach unten gerichtet. In der Umfangswandung 24 ist die Ablauföffnung 40 an der tiefsten Stelle der von den Wandelementen 28 gebildeten Auffangrinne gelegen. Die Wandelemente 38 erstrecken sich so weit, dass sie nicht nur vertikal unterhalb des gesamten Erdungskontaktes 34 sondern auch des metallischen Kontaktelementes 36 im Boden 22 des Klemmenkastens 6 gelegen sind. So fängt die Auffangrinne, welche von den Wandelementen 38 aufgespannt wird, auch Kondenswasser auf, welches von dem Kontaktelement 36 abtropft. Das Kondenswasser wird von den Wandelementen 38 der Ablauföffnung 40 zugeführt und kann durch diese aus dem Klemmenkasten 6 nach außen austreten.

Die Ablauföffnung 40 ist jedoch nicht direkt nach außen geöffnet, sondern öffnet sich in einen Freiraum bzw. Ringspalt 41, welcher zwischen dem Außenumfang des Statorgehäuses 4 und einer Außenwand 42 gebildet ist, welche sich als axiale Verlängerung der Umfangswandung 24 über den Außenumfang des Statorgehäuses 4 erstreckt. D. h. der Klemmenkasten 6 überlappt mit seiner Außenwandung 42 den Außenumfang des Statorgehäuses 4. Wie in Figur 1 zu sehen ist, muss der Ringspalt 41 nicht konzentrisch zur Längsachse X ausgebildet sein. Vielmehr weist er in dieser Ausführungsform an der unteren Seite (in der definierten Einbaulage des Pumpenaggregates) eine größere Höhe bzw. radiale Breite auf als an der Oberseite. Aus der Ablauföffnung 40 fließt das Kondenswasser in diesen Ringspalt 41 und kann aus diesem am axialen Ende der Außenwand 42, welche eine im Wesentlichen zylindrische, d. h. hier leicht konische Form aufweist, austreten. D. h. das Kondenswasser tritt dann an dem Ringspalt zwischen dem Axialende der Außenwand 42 und der gegenüberliegenden Stufe 44 am Außenumfang des Statorgehäuses 4 aus.

Dadurch, dass sich der von dem Ringspalt 41 gebildete Kanal, durch welchen das Kondenswasser abfließen muss, über eine große axiale Länge in Richtung der Längsachse X erstreckt, wird erreicht, dass Wasser bzw. Feuchtigkeit nicht ohne weiteres von außen in die Ablauföffnung 40 eintreten kann, so dass durch die Ablauföffnung 40 keine zusätzliche Gefahr geschaffen wird, das Feuchtigkeit in das Innere des Klemmenkastens 6 eindringt.

Darüber hinaus hat der Ringspalt 41 den Effekt, dass Luft, bevor sie in die Ablauföffnung 40 eintritt, zunächst getrocknet wird, da diese Luft in dem Ringspalt 41 am Außenumfang des Statorgehäuses 4 in axialer Richtung entlang strömen muss. Da das Statorgehäuse 4 aus Metall ist und wärmeleitend mit dem Pumpengehäuse und dem Spaltrohr 14 verbunden ist, kühlt sich das Statorgehäuse 4 bei Förderung kalter Medien, insbesondere Kaltwasser ab, so dass sich Feuchtigkeit in der in den Ringspalt 41 einströmender Luft am Außenumfang des Statorgehäuses 4 niederschlagen wird und die Luft, wenn sie die Ablauföffnung 40 erreicht, somit im Wesentlichen getrocknet ist. Vom Statorgehäuse 4 kann das Kondenswasser abtropfen und durch den Ringspalt 41 zu dem Spalt an der Stufe 44 des Statorgehäuses 4 abfließen und dort nach außen austreten. Dies wird dadurch begünstigt, dass die Außenwand 42 nicht exakt zylindrisch ist, sondern vielmehr an ihrem Innenumfang konisch ausgebildet ist, wobei sie sich zum eigentlichen Klemmenkasten 6 hin verjüngt. Auf diese Weise wird bei der vorgegebenen, in Figur 1 gezeigten Einbaulage ein Gefälle zu der Stufe 44 hin erreicht, welche das Abfließen des Wassers begünstigt.

### Bezugszeichenliste

- 2: Pumpengehäuse
- 4: Statorgehäuse
- 6: Klemmenkasten
- 8: Laufrad
- 10: Rotorwelle
- 12: Rotor
- 14: Spaltrohr
- 16: Stator
- 18: Leiterplatte
- 20: Anschlusskontakte
- 22: Boden
- 24: Umfangswandung
- 26: Steckkupplung
- 28: Anschlusskontakte
- 30: Axiale Stirnseite
- 32: Öffnung
- 34: Erdungskontakt
- 36: Kontaktelement
- 38: Wandelemente
- 40: Ablauföffnung
- 41: Ringspalt
- 42: Außenwand
- 44: Stufe

- X: Längsache

## Patentansprüche

1. Pumpenaggregat mit einem elektrischen Antriebsmotor und einem an dem elektrischen Antriebsmotor (4) angeordneten Klemmenkasten (6), wobei sich von dem elektrischen Antriebsmotor (4) zumindest ein metallisches Bauteil (34) in das Innere des Klemmenkastens (6) hinein erstreckt, **dadurch gekennzeichnet, dass** in der Umgebung des metallischen Bauteiles im Inneren des Klemmenkastens eine Auffangeinrichtung (38, 40) zum Auffangen von sich an dem metallischen Bauteil (34) ansammelnden Kondenswasser angeordnet ist.

2. Pumpenaggregat nach Anspruch 1, **dadurch gekennzeichnet, dass** die Auffangeinrichtung (38) als ein in zumindest einer vorgegebenen Einbaulage des Pumpenaggregates unterhalb des metallischen Bauteils (34) im Inneren des Klemmenkastens (6) angeordneter nach oben geöffneter Sammelraum ausgebildet ist.

3. Pumpenaggregat nach Anspruch 2, **dadurch gekennzeichnet, dass** der Sammelraum mit zumindest einer zu einer Außenseite des Klemmenkastens (6) geöffneten Ablauföffnung (40) versehen ist, welche derart angeordnet ist, dass durch diese Ablauföffnung (40) von der Auffangeinrichtung (38) aufgefangenes Kondenswasser aus dem Inneren des Klemmenkastens (6) nach außen ablaufen kann.

4. Pumpenaggregat nach Anspruch 3, **dadurch gekennzeichnet, dass** die Ablauföffnung (40) in einer dem metallischen Bauteil (34) benachbarten Wandung (24) ausgebildet ist.

5. Pumpenaggregat nach Anspruch 3 oder 4, **dadurch gekennzeichnet, dass** der Sammelraum zumindest zwei schräg aufeinander zulaufende Seitenflächen (38) aufweist, welche im Bereich ihres geringsten Abstandes zueinander an die Ablauföffnung (40) angrenzen.

6. Pumpenaggregat nach einem der vorangehenden Ansprüche, **dadurch gekennzeichnet, dass** der elektrische Antriebsmotor (4) ein nasslaufender Elektromotor ist.

7. Pumpenaggregat nach einem der vorangehenden Ansprüche, **dadurch gekennzeichnet, dass** das metallische Element (34) mit einem Statorgehäuse (4) oder einem Spaltrohr (14) des elektrischen Antriebsmotors verbunden ist.

8. Pumpenaggregat nach einem der vorangehenden Ansprüche, **dadurch gekennzeichnet, dass** das metallische Element (34) ein elektrischer Kontakt und insbesondere ein Erdungskontakt ist.

9. Pumpenaggregat nach einem der vorangehenden Ansprüche, **dadurch gekennzeichnet, dass** das metallische Bauteil (34) sich durch eine Öffnung (32) im Boden (22) des Klemmenkastens (6) in diesen hinein erstreckt.

10. Pumpenaggregat nach Anspruch 9, **dadurch gekennzeichnet, dass** an der Öffnung (32) eine Dichtung angeordnet ist, welche die Öffnung nach außen dicht verschließt und vorzugsweise an einer Wand eines Statorgehäuses (4) des elektrischen Antriebsmotors dichtend zur Anlage kommt.

11. Pumpenaggregat nach Anspruch 3 und Anspruch 9 oder 10, **dadurch gekennzeichnet, dass** die Ablauföffnung (40) in einer sich quer zu dem Boden (22) erstreckenden Umfangswandung (24) ausgebildet ist.

12. Pumpenaggregat nach Anspruch 11, **dadurch gekennzeichnet, dass** die Ablauföffnung (40) in einem Bereich der Umfangswandung (24) gelegen ist, welcher dem metallischen Bauteil (34) am nächsten liegt.

13. Pumpenaggregat nach einem der vorangehenden Ansprüche, **dadurch gekennzeichnet, dass** der an dem elektrischen Antriebsmotor angeordnete Klemmenkasten (6) mit Ausnahme der Ablauföffnung (40) nach außen vollständig geschlossen ist.

14. Pumpenaggregat nach einem der vorangehenden Ansprüche, **dadurch gekennzeichnet, dass** die Ablauföffnung (40) in einer Wandung (24) des Klemmenkastens (6) ausgebildet ist und an der Außenseite der Wandung (24) von einer zu der Außenseite der Wandung beabstandeten Außenwand (42) überdeckt ist.

15. Pumpenaggregat nach einem der vorangehenden Ansprüche, bei welchem der Klemmenkasten (6) zumindest eine Öffnung (40) aufweist, an deren Außenseite sich ein Luftkanal (41) anschließt, welcher an einer Außenseite eines Statorgehäuses (4) des elektrischen Antriebsmotors entlanggeführt ist.

16. Pumpenaggregat nach einem der vorangehenden Ansprüche, **dadurch gekennzeichnet, dass** es als ein Umwälzpumpenaggregat ausgebildet ist.

## Claims

1. A pump assembly with an electric drive motor and with a terminal box (6) arranged on the electric drive motor (4), wherein at least one metallic component (34) extends from the electric drive motor (4) into the inside of the terminal box (6), **characterised in that** a capture device (38, 40) for capturing condensation water collecting on the metallic component (34) is arranged in the proximity of the metallic component, in the inside of the terminal box.

2. A pump assembly according to claim 1, **characterised in that** the capture device (38) is designed as a collection space open to the top and arranged below the metallic component (34) in the inside of the terminal box (6), in at least one predefined installation position of the pump assembly.

3. A pump assembly according to claim 2, **characterised in that** the collection space is provided with at least one run-off opening (40) which is open to an outer side of the terminal box (6) and which is arranged in a manner such that condensation water captured by the capture device (38) can run off to the outside through this run-off opening (40), out of the inside of the terminal box (6).

4. A pump assembly according to claim 3, **characterised in that** the run-off opening (40) is formed in a wall (24) which is adjacent the metallic component (34).

5. A pump assembly according to claim 3 or 4, **characterised in that** the collection space comprises at least two side surfaces (38) which taper obliquely to one another and which in the region of their smallest distance to one another are adjacent the run-off opening (40).

6. A pump assembly according to one of the preceding claims, **characterised in that** the electric drive motor (4) is a wet-running electric motor.

7. A pump assembly according to one of the preceding claims, **characterised in that** the metallic element (34) is connected to a stator housing (4) or to a can (14) of the electrical drive motor.

8. A pump assembly according to one of the preceding claims, **characterised in that** the metallic element (34) is an electrical contact and in particular an earth contact.

9. A pump assembly according to one of the preceding claims, **characterised in that** the metallic component (34) extends through an opening (32) in the base (22) of the terminal box (6), into this.

10. A pump assembly according to claim 9, **characterised in that** a seal is arranged on the opening (32), said seal closing the opening to the outside in a sealed manner and preferably coming to sealingly bear on a wall of a stator housing (4) of the electric drive motor.

11. A pump assembly according to claim 3 and claim 9 or 10, **characterised in that** the run-off opening (40) is formed in a peripheral wall (24) extending transversely to the base (22).

12. A pump assembly according to claim 11, **characterised in that** the run-off opening (40) is situated in a region of the peripheral wall (24) which lies closest to the metallic component (34).

13. A pump assembly according to one of the preceding claims, **characterised in that** the terminal box (6) arranged on the electric drive motor is completely closed to the outside, with the exception of the run-off opening (40).

14. A pump assembly according to one of the preceding claims, **characterised in that** the run-off opening (40) is formed in a wall (24) of the terminal box (6) and is covered on the outer side of the wall (24) by an outer wall (42) distanced to the outer side of the wall.

15. A pump assembly according to one of the preceding claims, **characterised in that** the terminal box (6) comprises at least one opening (40), on whose outer side an air channel (41) connects, said air channel being led along an outer side of a stator housing (4) of the electric drive motor.

16. A pump assembly according to one of the preceding claims, **characterised in that** it is designed as a circulation pump assembly.

## Revendications

1. Groupe motopompe comportant un moteur d'entraînement électrique et une boîte à bornes (6) disposée au niveau du moteur d'entraînement électrique (4), dans lequel au moins un élément métallique (34) s'étend du moteur d'entraînement électrique (4) jusqu'à l'intérieur de la boîte à bornes (6), **caractérisé en ce qu'**à l'intérieur de la boîte à bornes est disposé, dans le voisinage de l'élément métallique, un dispositif collecteur (38, 40) destiné à collecter l'eau de condensation qui s'accumule au niveau de l'élément métallique (34).

2. Groupe motopompe selon la revendication 1, **caractérisé en ce que** le dispositif collecteur (38) est exécuté en tant que chambre de retenue s'ouvrant vers le haut, qui est disposée, dans au moins une position de montage prédéfinie du groupe motopompe, au-dessous de l'élément métallique (34) à l'intérieur de la boîte à bornes (6).

3. Groupe motopompe selon la revendication 2, **caractérisé en ce que** la chambre de retenue est munie d'au moins une ouverture d'écoulement (40) s'ouvrant sur un côté extérieur de la boîte à bornes (6), qui est disposée de telle sorte que l'eau de condensation collectée par le dispositif collecteur (38) peut s'écouler de l'intérieur de la boîte à bornes (6) vers l'extérieur à travers cette ouverture d'écoulement (40).

4. Groupe motopompe selon la revendication 3, **caractérisé en ce que** l'ouverture d'écoulement (40) est formée dans une paroi (24) proche de l'élément métallique (34).

5. Groupe motopompe selon la revendication 3 ou 4, **caractérisé en ce que** la chambre de retenue présente au moins deux surfaces latérales (38) qui se rapprochent obliquement l'une de l'autre et qui sont limitrophes de l'ouverture d'écoulement (40) dans la région de leur écartement minimum.

6. Groupe motopompe selon l'une des revendications précédentes, **caractérisé en ce que** le moteur d'entraînement électrique (4) est un moteur électrique de type humide.

7. Groupe motopompe selon l'une des revendications précédentes, **caractérisé en ce que** l'élément métallique (34) est relié à un carter de stator (4) ou à une gaine (14) du moteur d'entraînement électrique.

8. Groupe motopompe selon l'une des revendications précédentes, **caractérisé en ce que** l'élément métallique (34) est un contact électrique et en particulier un contact de mise à la terre.

9. Groupe motopompe selon l'une des revendications précédentes, **caractérisé en ce que** l'élément métallique (34) pénètre dans la boîte à bornes (6) à travers une ouverture (32) pratiquée dans le fond (22) de celle-ci.

10. Groupe motopompe selon la revendication 9, **caractérisé en ce qu'**au niveau de l'ouverture (32) est disposée une garniture d'étanchéité qui ferme l'ouverture à joint étanche par rapport à l'extérieur et qui entre de préférence en contact avec une paroi d'un carter de stator (4) du moteur d'entraînement électrique en formant un joint étanche.

11. Groupe motopompe selon la revendication 3 et la revendication 9 ou 10, **caractérisé en ce que** l'ouverture d'écoulement (40) est formée dans une paroi périphérique (24) qui s'étend transversalement au fond (22).

12. Groupe motopompe selon la revendication 11, **caractérisé en ce que** l'ouverture d'écoulement (40) est située dans une région de la paroi périphérique (24) qui est la plus rapprochée de l'élément métallique (34).

13. Groupe motopompe selon l'une des revendications précédentes, **caractérisé en ce que** la boîte à bornes (6) placée au niveau du moteur d'entraînement électrique est entièrement fermée par rapport à l'extérieur, à l'exception de l'ouverture d'écoulement (40).

14. Groupe motopompe selon l'une des revendications précédentes, **caractérisé en ce que** l'ouverture d'écoulement (40) est formée dans une paroi (24) de la boîte à bornes (6) et est recouverte au niveau de la face extérieure de la paroi (24) par un panneau extérieur (42) qui est espacé de la face extérieure de la paroi.

15. Groupe motopompe selon l'une des revendications précédentes, dans lequel la boîte à bornes (6) présente au moins une ouverture (40) au côté extérieur de laquelle se raccorde un conduit d'air (41) guidé le long d'un côté extérieur d'un carter de stator (4) du moteur d'entraînement électrique.

16. Groupe motopompe selon l'une des revendications précédentes, **caractérisé en ce qu'**il est réalisé en tant que groupe motopompe de circulation.
